(19) 
**Europäisches Patentamt**
**European Patent Office**
**Office européen des brevets**

(11) **EP 1 867 422 A2**

(12) **EUROPÄISCHE PATENTANMELDUNG**

(43) Veröffentlichungstag:
**19.12.2007  Patentblatt 2007/51**

(51) Int Cl.:
*B23H 1/02* (2006.01)    *B23H 7/18* (2006.01)

(21) Anmeldenummer: **07106309.3**

(22) Anmeldetag: **17.04.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **13.06.2006  DE 102006027333**

(71) Anmelder: **ROBERT BOSCH GMBH**
**70442 Stuttgart (DE)**

(72) Erfinder: **Korthals, Joern**
**70469 Stuttgart (DE)**

(54) **Vorrichtung und Verfahren zur elektrochemischen Bearbeitung von Werkstücken**

(57)  Die vorliegende Erfindung betrifft eine Vorrichtung und ein Verfahren zur elektromechanischen Bearbeitung von Werkstücken, wobei eine Spaltregelung und/ oder Prozessregelung der elektrochemischen Bearbeitung genauer erfolgen kann,
wobei die Spaltregelung (6) und/oder Prozessregelung (8) auf Grundlage einer Impedanzmessung (5) über den Spalt zwischen einer Elektrode (2) und einem Werkstück (3) ausführt.

Fig. 1

**Beschreibung**

Stand der Technik

Die vorliegende Erfindung betrifft eine Vorrichtung und ein Verfahren zur elektrochemischen Bearbeitung von Werkstücken.

Die elektrochemische Bearbeitung von Werkstücken, auch ECM-Verfahren (Electro Chemical Machining) genannt, ist aus dem Stand der Technik bekannt. Bei derartigen Verfahren wird mittels einer Elektrolyse eine Oberfläche eines Werkstücks bearbeitet. Hierzu wird eine Elektrode verwendet und das in der Regel metallische Werkstück wird in einer elektrolytischen Flüssigkeit angeordnet. Die Elektrode und das Werkstück werden über eine geeignete Gleichstrom- bzw. Gleichspannungsquelle miteinander verbunden, wodurch eine Bearbeitung des Werkstücks, insbesondere ein Abtrag von Material vom Werkstück oder ein Auftragen von Material auf das Werkstück, ermöglicht wird.

Bei der elektrochemischen Bearbeitung von Werkstücken ist daher der Abstand zwischen der Elektrode und dem Werkstück, der Spalt, einer der bestimmenden Prozessparameter. Deshalb ist die Kenntnis über den Spaltabstand zwischen der Elektrode und dem Werkstück als Funktion über die Zeit wertvoll. Sie wird für eine Prozessregelung, für das Antasten der Werkstückoberfläche vor Prozessbeginn und für eine Kurzschlussvorhersage benötigt. Das gilt insbesondere für ECM-Verfahren mit oszillierender Elektrode.

Es sind verschiedene Vorschläge zur Spaltbestimmung bekannt, bei denen der Spaltabstand über dessen Widerstand bestimmt wird. Dies ist möglich, da der Spalt zwischen den Grenzflächen der Elektrode und des Werkstücks nahezu wie ein ohmscher Widerstand wirkt. Zur Bestimmung des Widerstands wird der Quotient aus Strom und Spannung über den Spalt bestimmt.

Weiter ist es auch bekannt, den elektrischen Widerstand durch eine Strom- und eine Spannungsmessung in unterschiedlichen bekannten Abständen zum Werkstück zu bestimmen, wobei die bekannten Abstände für die Messung als Referenz dienen.

Offenbarung der Erfindung

Die erfindungsgemäße Vorrichtung zur elektrochemischen Bearbeitung von Werkstücken mit den Merkmalen des Patentanspruchs 1 weist demgegenüber den Vorteil auf, dass eine Spaltregelung und/oder eine Prozessregelung der elektrochemischen Bearbeitung genauer und zuverlässiger durchgeführt werden kann. Die erfindungsgemäße Vorrichtung führt nämlich die Spaltregelung und/oder Prozessregelung der ECM-Bearbeitung auf Grundlage einer Impedanzmessung über den Spalt zwischen Elektrode und Werkstück aus. Hierbei wird also nicht lediglich der Quotient aus Strom und Spannung bestimmt, um den Widerstand des Spalts zu bestimmen, sondern es wird die gesamte Impedanz zwischen Elektrode und Werkstück ermittelt, d.h., sowohl der ohmsche Wirkanteil als auch der kapazitive und/oder induktive Blindanteil des elektrischen Widerstands. Anhand des aus der gemessenen Impedanz errechneten ohmschen Spaltwiderstands kann in bekannter Weise der Spaltabstand bestimmt werden bzw. eine Spaltregelung erfolgen. Da erfindungsgemäß ebenfalls die Kapazität des Spalts bestimmt wird, die bei der herkömmlichen Spaltmessung aus dem Quotienten von Strom und Spannung als Störgröße wirkt, um eben diese Störgröße zu kompensieren, kann anhand der bestimmten Kapazität des Spalts ein Prozesszustand abgeschätzt werden und somit eine Prozessregelung erfolgen. Da mittels der Impedanzmessung der ohmsche Widerstand und der Blindwiderstand getrennt gemessen werden, kann die Spaltmessung sicherer durchgeführt werden, da nur der ohmsche Widerstand ein Maß für die Spaltlänge ist und der kapazitive und/oder der induktive Einfluss auf die Messung ausgeschlossen wird. Der gemessene Blindwiderstand ist, wie auch der ohmsche Widerstand, für die Beurteilung des Prozesszustandes wertvoll und lässt Rückschlüsse auf die Oberflächen der Elektroden des Werkstücks zu.

Das erfindungsgemäße Verfahren zur ECM-Bearbeitung von Werkstücken nach Patentanspruch 9 ist demzufolge durch eine Spaltregelung und/oder Prozessregelung der ECM-Bearbeitung auf Grundlage einer Impedanzmessung über den Spalt zwischen Elektrode und Werkstück gekennzeichnet.

Die jeweiligen Unteransprüche zeigen bevorzugte Weiterbildungen der Erfindung.

Vorzugsweise wird in der erfindungsgemäßen Vorrichtung oder in dem erfindungsgemäßen Verfahren eine Impedanzmessbrücke zur Impedanzmessung verwendet. Diese ist zwar in der Regel langsam und kostenintensiv, aber dafür sehr genau.

Erfindungsgemäß werden vorzugsweise getrennte Messungen sowohl des ohmschen Widerstands als auch der Kapazität und/oder der Induktivität durchgeführt. In der erfindungsgemäßen Regelungsvorrichtung erfolgt diese vorzugsweise getrennte Durchführung der Messungen durch die Regelungsvorrichtung. Weiter vorzugsweise erfolgen die getrennten Messungen gleichzeitig und/oder hintereinander bei unterschiedlichen Frequenzen des jeweiligen Messsignals. In diesem Fall werden für die Impedanzmessung vorzugsweise zeitgleich oder hintereinander, weiter vorzugsweise zeitnah hintereinander, zwei Spannungen unterschiedlicher Frequenzen an den Spalt angelegt. Die beiden resultierenden Ströme werden mit den zugehörigen Frequenzen bestimmt. Aus den beiden Messdatensätzen mit jeweils Spannung, Strom und Frequenz können der ohmsche Widerstand R und die Kapazität C berechnet werden. Mit einer zusätzlichen Messung mit einer dritten Frequenz kann auch zusätzlich die Induktivität bestimmt werden. Eine der Messungen kann mit Gleichspannung, also der Frequenz Null, durchgeführt werden.

Nach der Erfindung wird bei den Messungen mit unterschiedlichen Frequenzen des jeweiligen Messsignals vorzugsweise eine jeweilige Messfrequenz auf ein enges Toleranzband geregelt und alle Frequenzen außerhalb des Toleranzbandes aus einem jeweiligen Messsignal herausgefiltert, um ein jeweiliges bereinigtes Messsignal zu erzeugen. Dies geschieht in der erfindungsgemäßen Vorrichtung vorzugsweise mittels eines oder mehrerer PLL-Schaltkreise. Dabei regelt ein PLL-Schaltkreis die jeweilige Messfrequenz auf ein enges Toleranzband. Weiterhin werden alle Frequenzen außerhalb des Toleranzbandes aus dem Messsignal herausgefiltert. Bei Einsatz eines PLL-Schaltkreises erfolgt das Messen mit den unterschiedlichen Frequenzen hintereinander, vorzugsweise zeitnah hintereinander. Bei Einsatz von mehreren PLL-Schaltkreisen und Filtern können zeitlich parallele Messungen erfolgen. In dem Fall, dass eine oder mehrere Messungen mit Gleichspannung, also der Frequenzen 0, durchgeführt werden, wird eine technisch einfachere Lösung erreicht, bei der jedoch der PLL-Schaltkreis nicht einsetzbar ist. Dadurch wird die Messung unsicherer.

Alternativ oder zusätzlich zu einem PLL-Schaltkreis weist die erfindungsgemäße Vorrichtung vorzugsweise ein einfaches Frequenzfilter auf, das für eine jeweilige Messfrequenz ausgelegt ist und alle Frequenzen außerhalb eines Durchlassbereichs aus einem jeweiligen Messsignal herausfiltert, um ein jeweiliges bereinigtes Messsignal zu erzeugen.

Erfindungsgemäß wird bei einer Messung mit zwei unterschiedlichen Frequenzen vorzugsweise der ohmsche Widerstand R des Spalts durch

$$R=(f_2*U_2/I_2-f_1*U_1/I_1)/(f_2-f_1)$$

bestimmt, wobei $f_2$ die Frequenz des zweiten Messsignals, $U_2$ die Spannung des zweiten Messsignals, $I_2$ der Strom des zweiten Messsignals, $f_1$ die Frequenz des ersten Messsignals, $U_1$ die Spannung des ersten Messsignals und $I_1$ der Strom des ersten Messsignals sind.

Neben dieser Bestimmung des ohmschen Widerstands des Spalts, bei der der kapazitive Einfluss auf die Messung ausgeschlossen wird, wird die Kapazität C des Spalts erfindungsgemäß vorzugsweise durch

$$C=1/(2*\pi*f_1*(U_1/I_1-R))$$

bestimmt. Die so bestimmte Kapazität ist wertvoll für die Beurteilung des Prozesszustandes und für die Oberflächen der Elektroden des Werkstücks, d.h., die gemessene Kapazität wird als ein Maß für Prozesszustände verwendet, z.B. für die Dicke der Passivierung einer Oberfläche der Elektrode oder des Werkstücks (Dünnschichtkapazität durch Passivieren).

Erfindungsgemäß wird vorzugsweise der Verlauf der Impedanz über die Zeit und/oder den bearbeiteten Weg aufgezeichnet und anhand des aufgezeichneten Verlaufs ein Elektrodenverschleiß, eine Änderung der Elektrodenoberfläche, eine Änderung der Elektrolyteigenschaften und/oder eine Änderung der Werkstoff- oder Oberflächeneigenschaften eines Werkstücks erkannt und angezeigt. Bei der Aufzeichnung der Impedanz werden hierbei vorzugsweise sowohl der Wirk- als auch der Blindanteil aufgezeichnet. Abhängig von Veränderungen des Impedanzverlaufs wird erfindungsgemäß vorzugsweise angezeigt, dass eine Reinigung oder Wartung der Bearbeitungsstation oder eine Elektrolytaufbereitung erforderlich wird oder ist. Solche Veränderungen der Prozessimpedanzverläufe werden auch als "Driften" bezeichnet.

Weiter wird erfindungsgemäß vorzugsweise überprüft, ob sich die Impedanz in einem Toleranzband befindet, wonach die Qualität des Werkstücks abhängig von der Überprüfung angezeigt wird. Das Toleranzband wird vorzugsweise anhand der Aufzeichnungen von Impedanzverläufen und den Ergebnissen einer Qualitätskontrolle der zugehörigen Werkstücke bestimmt. Befindet sich dann die Impedanz bei einem laufenden Prozess in diesem bestimmten Toleranzband für einen Prozesssollverlauf, so ist mit einem Werkstück ausreichender Qualität zu rechnen.

Für die Beurteilung des Prozesszustandes wird erfindungsgemäß entweder die gemessene Kapazität bzw. Induktivität, also der Blindanteil der gemessenen Impedanz, oder der gemessene ohmsche Widerstand, der proportional zum Spalt ist, also der gemessene Wirkanteil der Impedanz, verwendet. Es können auch beide Messgrößen, d.h., die Gesamtimpedanz, die aus Wirkanteil und Blindanteil besteht, verwendet werden.

Kurze Beschreibung der Zeichnung(en)

Nachfolgend werden Ausführungsbeispiele der Erfindung unter Bezugnahme auf die begleitende Zeichnung beschrieben. In der Zeichnung ist:

Figur 1    der Aufbau einer ECM-Maschine mit Prozessquelle und Regelungsvorrichtung nach einer bevorzugten Ausführungsform der Erfindung;

Figur 2    ein elektrotechnisches Ersatzschaltbild des Spaltes bei der elektrochemischen Bearbeitung;

Figur 3    ein in Figur 1 gezeigtes Impedanzmesssystem nach einer ersten bevorzugten Ausführungsform; und

Figur 4    ein in Figur 1 gezeigtes Impedanzmesssystem nach einer zweiten bevorzugten Ausführungsform.

Ausführungsform(en) der Erfindung

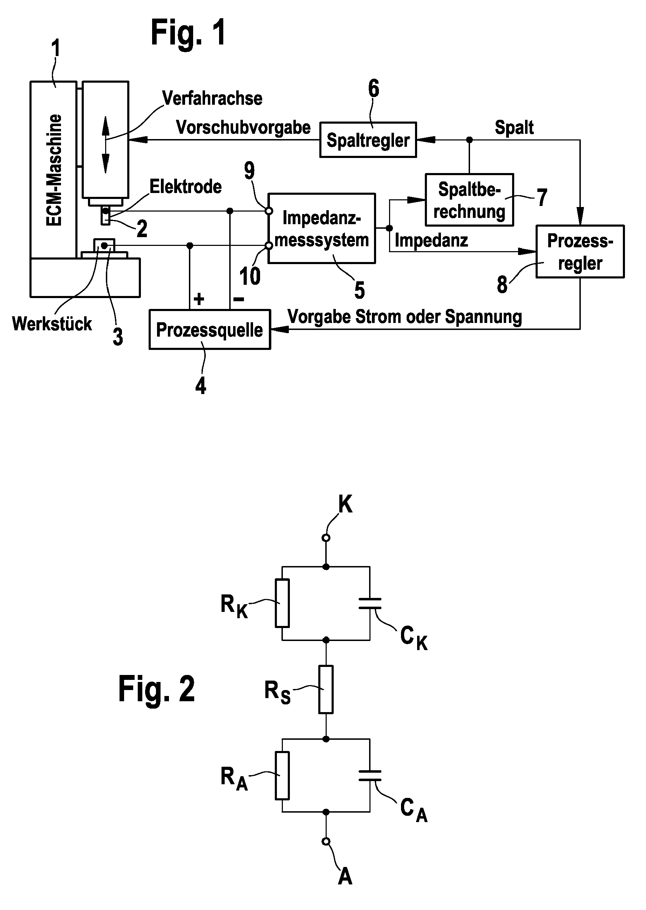

Figur 1 zeigt schematisch eine ECM-Maschine 1, die eine Elektrode 2 über einem Werkstück 3 hält und mit einem bestimmten Spalt zu diesem anordnen kann. Dazu kann die Elektrode senkrecht zur Werkstückoberfläche verfahren werden. Die Spaltbreite zwischen Werkstück 3 und Elektrode 2 wird über einen Spaltregler 6 geregelt, der eine Vorschubvorgabe an die ECM-Maschine 1 abgibt. Eine Prozessquelle 4 ist mit ihrem Minuspol an die Elektrode 2 und mit ihrem Pluspol an das Werkstück 3 angeschlossen. Die Prozessquelle 4 erhält einen Vorgabestrom und/oder eine Vorgabespannung von einem Prozessregler 8.

Ein Impedanzmesssystem 5 ist über einen ersten Anschluss 9 an die Elektrode 2 und über einen zweiten Anschluss 10 an das Werkstück 3 angeschlossen. Das Impedanzmesssystem 5 gibt die gemessene Impedanz an ein Spaltberechnungsmodul 7 und den Prozessregler 8 aus. Das Spaltberechnungsmodul 7 gibt den errechneten Spalt, d.h., die errechnete Spaltbreite, sowohl an den Spaltregler 6 als auch den Prozessregler 8 aus. Der Spaltregler 6 bestimmt die Vorschubvorgabe für die ECM-Maschine 1 anhand des berechneten Spalts und der Prozessregler 8 bestimmt den Vorgabestrom und/oder die Vorgabespannung anhand der gemessenen Impedanz und/oder des berechneten Spalts.

Die zuvor allgemein beschriebene Prozesskontrolle erfolgt ebenfalls innerhalb des Prozessreglers 8. Hierzu zeichnet der Prozessregler 8 den Verlauf der Impedanz, Wirk-und Blindanteil, über die Zeit und/oder über den bearbeiteten Weg auf. Veränderungen des Prozesses, insbesondere durch Elektrodenverschleiß, Veränderung der Elektrodenoberfläche, Änderungen der Elektrolyteigenschaften, z.B. durch zunehmende Verschmutzung, sowie Änderungen der Werkstoff- oder Oberflächeneigenschaften der Werkstücke, bewirken eine Veränderung des aufgezeichneten Impedanzverlaufs. Werden stetige Veränderungen des Prozessimpedanzverlaufs ("Driften") festgestellt, so wird abhängig von dem Betrag der Veränderungen angezeigt, ob eine Reinigung oder Wartung der Bearbeitungsstation oder eine Elektrolytaufbereitung erforderlich wird oder ist.

Anhand der aufgezeichneten Impedanzverläufe und den Ergebnissen einer Qualitätskontrolle der zugehörigen Werkstücke kann ein Toleranzband für einen Prozesssollverlauf der Impedanz erarbeitet werden. Befindet sich die Impedanz für einen laufenden Prozess in diesem Toleranzband, so ist mit einem Werkstück ausreichender Qualität zu rechnen. Dieses und/oder eine außerhalb dieses Toleranzbands liegende Impedanz wird erfindungsgemäß vorzugsweise angezeigt, wodurch eine automatisierte Qualitätskontrolle bzw. eine automatisierte Vorstufe zu einer Qualitätskontrolle erhalten wird. Werkstücke, bei denen der Impedanzverlauf außerhalb des Toleranzbands liegt, können automatisch aussortiert werden.

Figur 2 zeigt ein Ersatzschaltbild des Spalts bei der elektrochemischen Bearbeitung, bei dem sich an den Oberflächen der Elektrode (Kathode K) und des Werkstücks (Anode A) kapazitiv wirkende Grenzflächen mit einem ohmschen Wirkanteil und einem kapazitiven Blindanteil des elektrischen Widerstands befinden. Der Spalt zwischen den Grenzflächen wirkt nahezu wie ein ohmscher Widerstand. Das Ersatzschaltbild besteht also aus einer Parallelschaltung eines ohmschen Widerstands $R_K$ und eines Kondensators $C_K$, deren eines Ende an der Kathode K angeschlossen ist, und deren anderes Ende an einem ohmschen Widerstand $R_S$ angeschlossen ist, der den Spalt repräsentiert, an dessen anderem Ende ein Ende einer Parallelschaltung eines ohmschen Widerstands $R_A$ und eines Kondensators $C_A$ angeschlossen ist, deren anderes Ende an der Anode A angeschlossen ist.

Zur Bestimmung des Spaltabstandes ist nur der Spaltwiderstand $R_S$ verwendbar, weswegen erfindungsgemäß die Gesamtimpedanz zwischen Elektrode und Werkstück mittels unterschiedlicher Frequenzen gemessen wird, um den Spaltwiderstand $R_S$ aus diesen Messungen berechnen zu können. Der Spaltwiderstand $R_S$ ist proportional zur Spaltbreite.

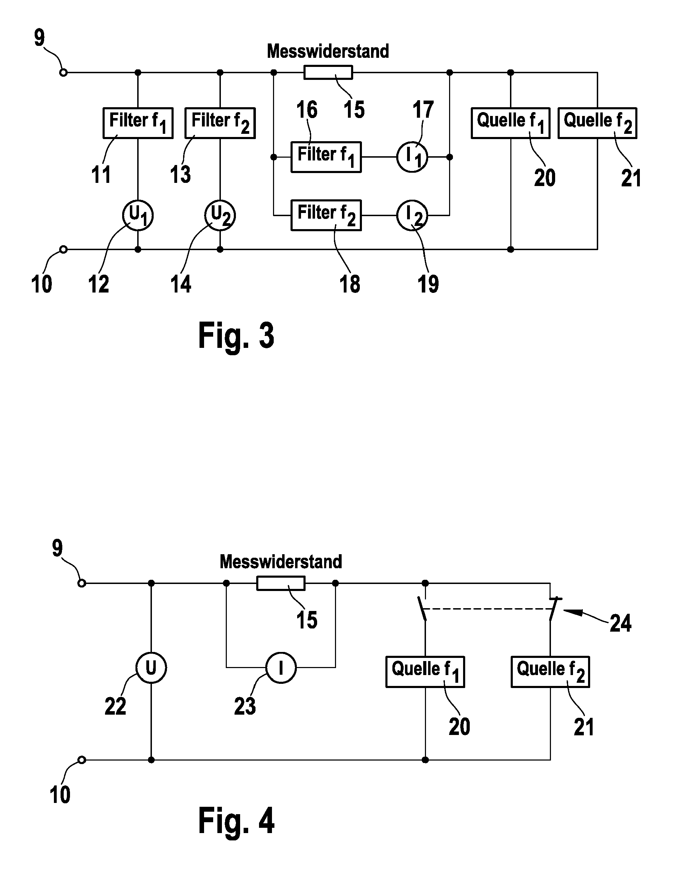

Figur 3 zeigt das Impedanzmesssystem 5 in einer ersten bevorzugten Ausführungsform, wobei die Impedanzmessungen mit zwei Frequenzen zeitgleich erfolgt. Zwischen dem ersten Anschluss 9 und dem zweiten Anschluss 10, zwischen denen die Impedanz zu messen ist, ist eine Reihenschaltung aus einem ersten Filter 11 und einem ersten Spannungsmesser 12 geschaltet. Der erste Filter 11 lässt die Frequenz $f_1$ durch und der erste Spannungsmesser 12 misst die Spannung $U_1$. Parallel zu dieser Reihenschaltung ist zwischen dem ersten Anschluss 9 und dem zweiten Anschluss 10 ebenfalls eine Reihenschaltung aus einem zweiten Filter 13 und einem zweiten Spannungsmesser 14 geschaltet. Der zweite Filter 13 lässt eine Frequenz $f_2$ durch und der zweite Spannungsmesser 14 misst eine Spannung $U_2$. Weiter ist zwischen dem ersten Anschluss 9 und dem zweiten Anschluss 10 parallel zu den beiden Reihenschaltungen aus Filter und Spannungsmesser eine Reihenschaltung aus einem Messwiderstand 15 und einer Parallelschaltung einer ersten Quelle 20 und einer zweiten Quelle 21 geschaltet. Die erste Quelle 20 liefert ein Messsignal mit einer Frequenz $f_1$ und die zweite Quelle 21 liefert ein Messsignal mit einer Frequenz $f_2$. Parallel zum Messwiderstand 15 ist eine Reihenschaltung aus einem dritten Filter 16 und einem dritten Spannungsmesser 17 geschaltet. Der dritte Filter 16 lässt die Frequenz $f_1$ durch und der dritte Spannungsmesser 17 misst in Verbindung mit dem Messwiderstand 15 einen ersten durch den Messwiderstand 15 fließenden Strom $I_1$. Ebenfalls parallel zum Messwiderstand 15 ist eine Reihenschaltung aus einem vierten Filter 18 und einem vierten Spannungsmesser 19 geschaltet. Der vierte Filter 18 lässt die Frequenz $f_2$ durch und der vierte Spannungsmesser 19 misst in Verbindung mit dem Messwiderstand 15 einen durch diesen fließenden zweiten Strom $I_2$. Die erste

Spannung $U_1$ und der erste Strom $I_1$ basieren auf dem von der ersten Quelle 20 ausgegebenen ersten Messsignal mit der Frequenz $f_1$, da sie jeweils über ein Filter gemessen werden, dass die Frequenz $f_1$ durchlässt und andere Frequenzen sperrt. Die zweite Spannung $U_2$ und der zweite Strom $I_2$ basieren auf den von der zweiten Quelle 21 ausgehenden zweiten Messsignal mit der Frequenz $f_2$, da sie jeweils über einen Filter gemessen werden, der die Frequenz $f_2$ durchlässt und andere Frequenzen sperrt. Die Filter haben natürlich tatsächlich einen Durchlassbereich, der um die jeweilige Durchlassfrequenz liegt, dieser ist jedoch so ausgelegt, dass sich die Messungen nicht gegenseitig beeinflussen. Anhand der ersten Spannung $U_1$, der zweiten Spannung $U_2$, des ersten Stroms $I_1$, des zweiten Stroms $I_2$ der Frequenz $f_1$ des ersten Messsignals und der Frequenz $f_2$ des zweiten Messsignals kann die Impedanz des Spalts von einer nicht gezeigten Recheneinheit berechnet werden und wird von dem Impedanzmesssystem 5 an die Spaltberechnungseinheit 7 und den Prozessregler 8 ausgegeben.

Die Figur 4 zeigt eine zweite bevorzugte Ausführungsform des in Figur 1 gezeigten Impedanzmesssystems 5. Hier erfolgt eine Impedanzmessung mit zwei Frequenzen hintereinander. In dieser zweiten bevorzugten Ausführungsform des Impedanzmesssystems 5 ist zwischen dem ersten Anschluss 9 und dem zweiten Anschluss 10 ein erster Spannungsmesser 22 angeschlossen. Ebenfalls zwischen dem ersten Anschluss 9 und dem zweiten Anschluss 10 ist eine Reihenschaltung aus einem Messwiderstand 15 und einer Parallelschaltung der ersten Quelle 20 und der zweiten Quelle 21 geschaltet, wobei hier jedoch die Quellen über einen Umschalter 24 mit dem Messwiderstand 15 verbunden sind, so dass jeweils nur das Messsignal einer der Quellen durch den Messwiderstand 15 fließt. Parallel zum Messwiderstand 15 ist ein zweiter Spannungsmesser 23 geschaltet, der in Verbindung mit dem Messwiderstand 15 einen durch diesen fließenden Strom I misst.

Der Umschalter 24 wird von einer nicht gezeigten Berechnungs- und Steuereinheit gesteuert, die aus den jeweiligen gemessenen Spannungen bzw. Strömen in Verbindung mit den jeweiligen Messfrequenzen die Impedanz berechnet.

Da die Messsignale mit den Frequenzen $f_1$ und $f_2$ unterschiedliche Frequenzen zu dem von der Prozessquelle ausgegebenen Signal haben, kann die Impedanzmessung parallel zur Bearbeitung des Werkstücks 3 erfolgen. Aufgrund der gewählten Spannungen der Messsignale wird die Bearbeitung des Werkstücks 3 durch die Impedanzmessung nicht beeinflusst.

**Patentansprüche**

1.  Vorrichtung zur elektrochemischen Bearbeitung von Werkstücken, umfassend eine Regelungsvorrichtung (5, 6, 7, 8), welche eine Spaltregelung (6) und/ oder Prozessregelung (8) der elektrochemischen Bearbeitung auf Grundlage einer Impedanzmessung (5) über den Spalt zwischen einer Elektrode (2) und einem Werkstück (3) ausführt.

2.  Vorrichtung nach Anspruch 1, **gekennzeichnet durch** eine Impedanzmessbrücke zur Impedanzmessung.

3.  Vorrichtung nach einem der vorstehenden Ansprüche, **dadurch gekennzeichnet, dass** die Regelungsvorrichtung (5, 6, 7, 8) getrennte Messungen sowohl des ohmschen Widerstands als auch der Kapazität und/oder der Induktivität des Spalts durchführt.

4.  Vorrichtung nach Anspruch 3, **dadurch gekennzeichnet, dass** die getrennten Messungen gleichzeitig und/oder hintereinander bei unterschiedlichen Frequenzen ($f_1$, $f_2$) des jeweiligen Messsignals erfolgen.

5.  Vorrichtung nach Anspruch 4, **gekennzeichnet durch** wenigstens einen PLL-Schaltkreis, der eine jeweilige Messfrequenz ($f_1$, $f_2$) auf ein enges Toleranzband regelt und alle Frequenzen außerhalb des Toleranzbandes aus einem jeweiligen Messsignal herausfiltert, um ein jeweiliges bereinigtes Messsignal zu erzeugen.

6.  Vorrichtung nach Anspruch 4 oder 5, **gekennzeichnet durch** wenigstens ein Frequenzfilter (11, 13, 16, 18), das für eine jeweilige Messfrequenz ($f_1$, $f_2$) ausgelegt ist und alle Frequenzen außerhalb eines Durchlassbereichs aus einem jeweiligen Messsignal herausfiltert, um ein jeweiliges bereinigtes Messsignal zu erzeugen.

7.  Vorrichtung nach einem der vorstehenden Ansprüche 4 bis 6, **dadurch gekennzeichnet, dass** bei einer Messung mit zwei unterschiedlichen Frequenzen der ohmsche Widerstand R des Spalts durch

$$R = (f_2*U_2/I_2 - f_1*U_1/I_1)/(f_2-f_1)$$

bestimmt wird, wobei $f_2$ die Frequenz des zweiten Messsignals, $U_2$ die Spannung des zweiten Messsignals, $I_2$ der Strom des zweiten Messsignals, $f_1$ die Frequenz des ersten Messsignals, $U_1$ die Spannung des ersten Messsignals und $I_1$ der Strom des ersten Messsignals sind.

8.  Vorrichtung nach Anspruch 7, **dadurch gekennzeichnet, dass** die Kapazität C des Spalts durch

$$C=1/(2*\pi*f_1*(U_1/I_1-R))$$

bestimmt wird.

9. Verfahren zur elektrochemischen Bearbeitung von Werkstücken, **gekennzeichnet durch** eine Spaltregelung (6) und/oder Prozessregelung (8) der elektrochemischen Bearbeitung auf Grundlage einer Impedanzmessung über den Spalt zwischen einer Elektrode (2) und einem Werkstück (3).

10. Verfahren nach Anspruch 9, **gekennzeichnet durch** getrennte Messungen sowohl des ohmschen Widerstands als auch der Kapazität und/oder der Induktivität zur Impedanzmessung.

11. Verfahren nach Anspruch 10, **gekennzeichnet durch** den Einsatz einer Impedanzmessbrücke zur Impedanzmessung.

12. Verfahren nach Anspruch 10 oder 11, **dadurch gekennzeichnet, dass** die getrennten Messungen gleichzeitig und/oder hintereinander bei unterschiedlichen Frequenzen ($f_1$, $f_2$) des jeweiligen Messsignals erfolgen.

13. Verfahren nach Anspruch 12, **gekennzeichnet durch** das Regeln einer jeweiligen Messfrequenz ($f_1$, $f_2$) auf ein enges Toleranzband und das Herausfiltern aller Frequenzen außerhalb des Toleranzbandes aus einem jeweiligen Messsignal, um ein jeweiliges bereinigtes Messsignal zu erzeugen.

14. Verfahren nach einem der vorstehenden Ansprüche 9 bis 13, **dadurch gekennzeichnet, dass** bei einer Messung mit zwei unterschiedlichen Frequenzen der ohmsche Widerstand R des Spalts durch

$$R=(f_2*U_2/I_2-f_1*U_1/I_1)/(f_2-f_1)$$

bestimmt wird, wobei $f_2$ die Frequenz des zweiten Messsignals, $U_2$ die Spannung des zweiten Messsignals, $I_2$ der Strom des zweiten Messsignals, $f_1$ die Frequenz des ersten Messsignals, $U_1$ die Spannung des ersten Messsignals und $I_1$ der Strom des ersten Messsignals sind.

15. Verfahren nach Anspruch 14, **dadurch gekennzeichnet, dass** die Kapazität C des Spalts durch

$$C=1/(2*\pi*f_1*(U_1/I_1-R))$$

16. Verfahren nach einem der vorstehenden Ansprüche 9 bis 14, **dadurch gekennzeichnet, dass** der Verlauf der Impedanz über die Zeit und/oder den bearbeiteten Weg aufgezeichnet wird und anhand des aufgezeichneten Verlaufs ein Elektrodenverschleiß, eine Veränderung der Elektrodenoberfläche, eine Änderung der Elektrolyteigenschaften und/oder eine Änderung der Werkstoff- oder Oberflächeneigenschaften eines Werkstücks erkannt und angezeigt wird.

17. Verfahren nach Anspruch 16, **gekennzeichnet durch** Anzeigen, dass eine Reinigung oder Wartung der Bearbeitungsstation oder eine Elektrolytaufbereitung erforderlich wird abhängig von Veränderungen des Impedanzverlaufs.

18. Verfahren nach einem der vorstehenden Ansprüche 9 bis 17, **gekennzeichnet durch** Überprüfen, ob sich die Impedanz in einem Toleranzband befindet und Anzeigen der Qualität des Werkstücks abhängig von der Überprüfung.

## Fig. 1

1

ECM-Maschine

Verfahrachse

Vorschubvorgabe

6

Spaltregler

Spalt

Elektrode

2

9

Impedanz-messsystem

Spaltbe-rechnung

7

Werkstück

10

Impedanz

Prozess-regler

5

8

3

+ −

Prozessquelle

Vorgabe Strom oder Spannung

4

## Fig. 2

K

$R_K$

$C_K$

$R_S$

$R_A$

$C_A$

A

**Messwiderstand**

9

| Filter f$_1$ | | Filter f$_2$ | | | Quelle f$_1$ | Quelle f$_2$ |

11    13    16    15    17    20    21

U$_1$    U$_2$    Filter f$_1$    I$_1$

Filter f$_2$    I$_2$

10    12    14    18    19

**Fig. 3**

**Messwiderstand**

9

15

U    I    24

Quelle f$_1$    Quelle f$_2$

22    23    20    21

10

**Fig. 4**